# EUROPÄISCHE PATENTANMELDUNG

(11) **EP 0 689 914 A1**
(43) Veröffentlichungstag der Anmeldung: **03.01.1996**
(21) Anmeldenummer: 95107961.5
(22) Anmeldetag: 25.05.1995
(51) Int. Cl.: B28B 3/00, C04B 35/63

(54) **Verfahren zur serienmässigen Herstellung von Hohlgefässen aus Keramik**

(30) Priorität: 29.06.1994 DE 4422705
(71) Anmelder: WILHELM SÖNDGEN GmbH, D-53343 Wachtberg-Adendorf (DE)
(72) Erfinder: Söndgen, Peter, D-53343 Wachtberg-Adendorf (DE)
(74) Vertreter: Werner, Hans-Karsten, Dr.

(57) **Zusammenfassung**

Das Verfahren zur serienmäßigen Herstellung von Hohlgefäßen aus Keramik besteht darin, daß die Keramikmasse als trockenes, rieselfähiges Granulat mit einem Wassergehalt unter 5 Gew.-% in eine Form einer isostatischen Presse eingebracht, verpreßt und anschließend nach dem Entformen gebrannt wird.

## Beschreibung

Gegenstand der vorliegenden Erfindung ist ein Verfahren zur serienmäßigen Herstellung von Hohlgefäßen aus Keramik.

Hohlgefäße aus Keramik wurden bisher ausschließlich hergestellt durch plastische Verformung oder Gießen der Keramikmasse mit relativ hohem Wassergehalt. Dieser Wassergehalt muß vor dem Brennen durch Trocknen entfernt werden, so daß darauf geachtet werden muß, daß die geformten Grünlinge sowohl den Trocknungsprozeß als auch den Brennprozeß einwandfrei überstehen. In der Praxis entstehen jedoch bei beiden Schritten Fehler, so daß stets ein gewisser Anteil der Produktion als zweite Wahl anfällt. Ware der zweiten Wahl ist nur mit erheblichen Preisabschlägen vermarktbar. Größere Fehler führen zu Ausschuß. Diese Fehler und der sehr hohe Lohnkostenanteil bei der Herstellung von Keramik hat dazu geführt, neue Verfahren zur Verarbeitung von Keramik zu entwickeln, die sich weitgehend automatisieren lassen und dadurch sowohl den Lohnanteil als auch die Fehlerquote senken.

Aus der DE-A-42 25 623 ist bekannt, Hohlgefäße wie Tassen im Spritzgießverfahren herzustellen. Dabei wird als eigentliches Gefäßteil der Tassenkörper mit Henkel hergestellt. Nachteil dieses Verfahrens ist, daß sich die Schichten der Schichtsilikate beim Spritzvorgang einregeln, so daß beim fertigen Spritzling eine Textur vorhanden ist, bei der die Schichtsilikate parallel zur Bauteilwand liegen. Dies wiederum führt dazu, daß das Wasser und Bindemittel nur schlecht oder ungleichmäßig entweichen können. Dieser Nachteil läßt sich dadurch abschwächen, daß die Masse vor dem Mischen einer Temperatur- und/oder Druckbehandlung unterzogen wird, bei der das Kristallwasser ausgetrieben wird.

Die DE-C-32 45 184 beschreibt ein Verfahren zur Herstellung von spritzgießfähigen keramischen Massen, bei welchem unplastische keramische Pulver in einem organischen Lösungsmittel oder Lösungsmittelgemisch vorgelegt werden, und wobei diesem Gemisch von Wachsen, Ölen oder Kunststoffen ein in Lösung befindlicher oder gasförmiger Reaktant zugesetzt wird, der in dem Gemisch eine Lösungspolymerisation bewirkt. Dieses Verfahren wird vor allem eingesetzt für die Herstellung von pulverförmigen keramischen Materialien, wie synthetischen Carbiden, Nitriden und Oxiden, wie Siliciumcarbid, Siliciumnitrid, Aluminiumoxid oder Zirkoniumdioxid.

Für Flachgeschirr wurde bereits ein Verfahren entwickelt, bei welchem die Keramikmasse als trockenes, rieselfähiges Granulat mit einem Wassergehalt unter 5 Gew.-% in eine Form einer isostatischen Presse eingebracht, verpreßt und anschließend nach dem Entfernen gebrannt wird. Die isostatische Presse besteht im allgemeinen aus einem Oberwerkzeug mit einem starren Oberstempeleinsatz und einem Unterwerkzeug mit einer Membrane. Dieses Verfahren war jedoch bisher nur für die Herstellung von Flachgeschirr geeignet und nicht für die Herstellung von Hohlgefäßen.

Ein Grund hierfür war, daß der Preßdruck bei Flachgeschirr einigermaßen gleichmäßig auf die Gesamtmenge des rieselfähigen Granulats einwirken kann. Ein weiterer Grund hierfür war, daß das einwandfrei Einfüllen des rieselfähigen Granulats in die Form der isostatischen Presse nicht möglich war, wenn es sich um Formen für Hohlgefäße handelte. Bereits bei einem Verhältnis von Durchmesser zu Tiefe des Hohlgefäßes von weniger als 3:1, insbesondere weniger als 2:1 wurden unüberwindliche Schwierigkeiten bei der Befüllung und dem Pressen der Form beobachtet. Dies ist auch ohne weiteres einsehbar, da bereits für Flachgeschirr erhebliche Schwierigkeiten zu überwinden waren bezüglich der Abstimmung der Bindertypen sowie des Baus und der Konstruktion der Preßwerkzeuge für die Flachgeschirrindustrie; vgl. "Industrie-Forum", DKG 70 (1993) Nr. 9, Seite 455 sowie Seiten 478 bis 481.

Die Erfindung hat sich die Aufgabe gestellt, das Verfahren der isostatischen Verpressung auch für Hohlgefäße anwendbar zu machen. Diese Aufgabe ist jetzt erstmals gelöst worden, wobei eine Reihe von zusätzlichen Maßnahmen notwendig sind, um das Verfahren erfolgreich durchführen zu können. Es handelt sich somit um ein neues Verfahren zur serienmäßigen Herstellung von Hohlgefäßen aus Keramik, welches dadurch gekennzeichnet ist, daß die Keramikmasse als trockenes, rieselfähiges Granulat mit einem Wassergehalt unter 5 Gew.-% in eine Form einer isostatische Presse eingebracht, verpreßt und anschließend nach dem Entformen gebrannt wird.

Bei dem erfindungsgemäßen Verfahren ist das Granulat durch einen organischen Binder zusammengehalten, welcher beim Brennen der geformten Keramikmasse verbrennt oder verdampft. Im Gegensatz zu einem Bindergehalt für das Granulat zur Herstellung von Flachgeschirr in der Größenordnung von 0,6 bis 0,8 %, benötigt das Granulat zur Herstellung von Hohlgefäßen im allgemeinen einen Bindergehalt von 0,6 bis 1,2 Gew.-%. Auch dies erfordert die Entwicklung neuer und spezieller Granulate. Der Gehalt an Feuchtigkeit beträgt meist nur noch 1 bis 3 %, vorzugsweise 2 %.

Weiterhin sollte dafür gesorgt werden, daß das Granulat nach dem Einbringen in die Form mit Druckluft vor dem endgültigem Preßvorgang durch kurzes Anpressen entlüftet wird.

Als Bindemittel werden im allgemeinen Stärke und Stärkederivate verwendet, die beim Brennprozeß rückstandslos verbrennen können. Sie führen auch zu keinen Verfärbungen der Keramik, da im allgemeinen in Gegenwart von überschüssigem Sauerstoff gebrannt wird. Geeignete Binder werden beispielsweise von der Firma Zschimmer und Schwarz in Lahnstein unter der Bezeichnung "PA 400" geliefert.

Weitere geeignete Binder sind Polyvinylalkohole. Ein derartiges Präparat wird ebenfalls von der Firma Zschimmer und Schwarz in Lahnstein angeboten unter der Bezeichnung "KB 2041".

Schließlich ist es meist notwendig, daß die Membrane des Unterwerkzeugs im Bereich des Bodens des Hohlgefäßes eine druckmindernde Einlage aufweist. Diese Maßnahme ist meistens notwendig, da der Preßdruck auf den Bodenteil der Hohlgefäße wesentlich höher ist als auf den Seitenwänden. Um auf die Seitenwände des Hohlgefäßes einen ausreichenden Druck ausüben zu können, müßte die Bodenfläche der Form mit wesentlich höherem Druck verpreßt werden, was beim Entformen zu Ausdehnungen und Aufwölbungen des Bodens führen kann. Als druckmindernde Einlage in die Membrane eignen sich mehr oder weniger dicke Kunststoffplatten. Diese druckmindernden Einlagen müssen größer und stärker sein, wenn relativ hohe und tiefe Hohlgefäße mit einem steilen Öffnungswinkel hergestellt werden sollen.

Nach dem erfindungsgemäßen Verfahren lassen sich rotationssymetrische und nichtrotationssymetrische Teile, wie Blumenübertöpfe, Schirmständer, Vasen, Schalen, Christbaumständer und Toilettenartikel aus Keramik herstellen. Es ist bereits jetzt gelungen, mit einer für das erfindungsgemäße Verfahren speziell entwickelten Presse, Hohlgefäße bis zu 40 cm Höhe und bis zu 50 cm Durchmesser herzustellen. Die Presse kann sowohl horizontal als auch vertikal ausgebildet sein.

Zur Durchführung des erfindungsgemäßen Verfahrens wird das Werkzeug geschlossen und dann die Form mit Preßgranulat gefüllt. Nach dem Füllen des Werkzeuges und der nachfolgenden Entlüftung durch kurzes Anpressen wird der endgültige Restdruck angewendet und die isostatische Verdichtung des Preßgranulats bewirkt. Nach dem Verpressen kann der Grünling entnommen werden und manuell oder mittels einer Putzmaschine geputzt werden.

Für die isostatische Verpressung reicht im allgemeinen ein Preßkraft von 5,0 MN. Diese Preßkraft wird vorzugsweise hydraulisch erzeugt. Es ist möglich, eine automatische Entformungsvorrichtung einzusetzen, die gleichzeitig eine Entgratungsvorrichtung aufweist. Vorzugsweise erfolgt daher die Übergabe aus der Preßform auf eine drehende Spindel, die mit einem Gratbrecher ausgestattet ist. Vorzugsweise ist die Presse so angeordnet, daß der gepreßte Artikel mit seinem Boden nach oben weist. Er wird daher bei der Entnahme um 180° geschwenkt und dann auf ein Transportband übergeben. Die so geformten Grünlinge für Hohlkörper können unmittelbar gebrannt werden, wobei darauf zu achten ist, daß der organische Binder vollständig verbrennt oder verdampft.

Ein besonderer Vorteil des erfindungsgemäßen Verfahrens besteht darin, daß es möglich ist, auch Formen herzustellen, die nicht rotationssymmetrisch sind. Beispielsweise können auch ovale Formen oder mehreckige Formen hergestellt werden, bei denen jedoch die Kanten abgerundet sein sollten. Weiterhin ist es beispielsweise möglich, einen außen am Boden von Schalen oder Töpfen ringförmigen Fuß so zu unterbrechen, daß der Raum unter dem Boden belüftet ist. Auch diese Unterbrechungen sollten vorzugsweise rund und nicht scharfkantig ausgestaltet sein. Dabei ist zu bedenken, daß anderenfalls die Membrane entsprechend scharfe Kanten aufweisen müßte. Weiterhin sind abgerundete Kanten weniger gefährdet, durch mechanische Beanspruchung abzusplittern.

## Patentansprüche

1. Verfahren zur serienmäßigen Herstellung von Hohlgefäßen aus Keramik, dadurch gekennzeichnet, daß die Keramikmasse als trockenes, rieselfähiges Granulat mit einem Wassergehalt unter 5 Gew.-% in eine Form einer isostatische Presse eingebracht, verpreßt und anschließend nach dem Entformen gebrannt wird.

2. Verfahren gemäß Anspruch 1, dadurch gekennzeichnet, daß das Granulat durch einen organischen Binder zusammengehalten wird, welcher beim Brennen der geformten Keramikmasse verbrennt oder verdampft.

3. Verfahren gemäß Anspruch 1 oder 2, dadurch gekennzeichnet, daß der Gehalt an Binder 0,6 bis 1,2 Gew.-% beträgt.

4. Verfahren gemäß einem der Ansprüche 1 bis 3, dadurch gekennzeichnet, daß das Granulat mit Druckluft in die Form eingebracht wird und das in die Form gebrachte Granulat vor dem endgültigen Preßvorgang durch kurzes Anpressen entlüftet wird.

5. Verfahren gemäß einem der Ansprüche 1 bis 4, dadurch gekennzeichnet, daß die Membrane des Unterwerkzeugs im Bereich des Bodens des Hohlgefäßes eine druckmindernde Einlage aufweist.
